# EUROPEAN PATENT APPLICATION

(11) **EP 1 121 910 A1**
(43) Date of publication of application: **08.08.2001**
(21) Application number: 99906021.3
(22) Date of filing: 23.02.1999
(51) Int. Cl.: A61C 17/26

(54) **DENTAL BRUSH WITH A PROTECTIVE SHELL DRIVEN BY ELETRIC MOTOR**

(30) Priority: 21.09.1998 CN 98119933
(71) Applicant: Jin, Xukai, Guanghua Town, Meishan Country, Sichuan Province 612160 (CN)
(72) Inventor: Jin, Xukai, Guanghua Town, Meishan Country, Sichuan Province 612160 (CN)
(74) Representative: Viering, Jentschura & Partner
(86) International application number: CN9900021
(87) International publication number: WO0016716

(57) **Abstract**

The present invention discloses a kind of dental brush with a protective shell driven by electric motor, it comprises a brush handle and a brush head, in the brush handle are installed a power supply and electric motor(s), and a switch is provided on the surface of the brush handle; it comprises further a transmission mechanism and a protective shell, the transmission shaft of the transmission mechanism is located in the brush handle, while the other components of the transmission mechanism and the brush head connected to the transmission component are mounted in the protective shell, the upper half of the brush hair of the brush head is arranged into left-hand spiral form and the lower half brush hair is arranged into right-hand spiral form. The protective shell is in the form of a cover or hood, a small portion of the brush hair is exposed at the opening of the cover or hood. The present invention adopts the principle of spiral advance, the effect of tooth brushing is notable; the protective shell can effectively avoid the irritation to the wall of the oral cavity when the brush head rotates at high speed, thereby assuring the safety and comfort during tooth brushing with the tooth brush according to the present invention.

## Description

### Technical Field

The present invention relates to a kind of dental brush with a protective shell driven by electric motor, pertaining to the technical field of electric power-driven toothbrush.

### Background Art

The current modes of tooth brushing can be divided in two categories: manual tooth brushing and electric tooth brushing.

The manual tooth brushing suffers from low efficiency, and the residue substances between teeth are difficult to be removed by transversal brushing, the effect of teeth cleaning is rather poor; vertical brushing is good for removing the dental calculuses as compared with transversal brushing, but it will readily cause the peeling of the gum from the teeth, in addition, the frequent movement of the brush head in the oral cavity can also readily cause the damage to the wall mucous membrane of the oral cavity so that the inflammation will be induced in the oral cavity. The electric tooth brushing came out in the 1960's and 1970's. The electric toothbrushes mainly have two types: rotational (wheel and "packaged bundle") and electric toothbrushes. The high frequency electric brush head which vibrates several thousand times per minute has really an advantage over the manual toothbrush which moves only by about 100 times per minute and the efficiency is higher, but it also has some drawbacks in structure, for example, it is rather difficult for wheel type or packaged bundle type rotational brush heads to remove the calculuses between teeth; while the up-and-down vibrational brush head will readily cause the peeling of the gum from the teeth; moreover, if no protective measures are taken, the brush head which moves at high speed will do damage to and stimulate or irritate the oral cavity ,etc., furthermore, the selling price of the electric toothbrush is rather high, therefore it is difficult for such electric toothbrush to be popularized.

The aim of the present invention is to overcome the above-mentioned drawbacks and to provide a kind of dental brush with a protective shell driven by electric motor which features simple structure, low cost, good effect in teeth cleaning and which will not damage the wall (mucous membrane) of the oral cavity.

### Summary of the invention

The technical scheme of the present invention is carried out as follows: a kind of dental brush with a protection shell driven by electric motor, it comprises a brush handle and a brush head, in the brush handle are installed a power supply and electric motor(s) with a switch provided on the surface of the brush handle, characterized in that it further comprises a transmission mechanism and a protective shell, the transmission mechanism includes a transmission shaft, a driving gear, at least a straight shaft cylindrical driven gear and at least a pair of bevel gears, the number of which corresponds to the number of the straight shaft cylindrical driven gears; the transmission shaft of the transmission mechanism is arranged within the brush handle, while the other components of the transmission mechanism and the brush head connected with the transmission component are arranged in the protective shell; one end of the transmission shaft is connected with the shaft of the electric motor, the other end is connected with the driving gear, the driving gear engages with the straight shaft cylindrical driven gear, the straight shaft cylindrical driven gear is coaxial with the driving bevel gear, the driving bevel gear engages with the driven bevel gear; a brush head is provided on the shaft of the driven bevel gear; the said protective shell is in the form of a cover or hood, with a small portion of brush hair of the brush head exposed at the opening of the protective shell.

### The further features of the present invention are:

The brush head is in the form of a cylindrical body, the brush hair on the brush head is arranged into two portions: an upper half brush hair is arranged in left-hand spiral form and a lower half brush hair is arranged in right-hand spiral form.

On account of the above adopted technical scheme of the present invention, the brush head moving at high speed can be effectively isolated by the protective shell and the wall of the oral cavity will not be stimulated or irritated, which ensures the safety and comfort during tooth brushing; according to the present invention, the use of multiple-set spiral cylindrical brush, which makes use of the principle of spiral advance, can remove completely the dental calculcuses.

In order to better understand the performance and features of the present invention, a detailed description will be made in the following with reference to the embodiment and the accompanied drawings:

### Brief introduction of the accompanied drawings

Figure 1 is a sectional view of the structure of the embodiment of the present invention.

Figure 2 is a sectional view taken by line A-A of Fig1.

Figure 3 is a top view of Fig 1.

### The preferred embodiment of the present invention

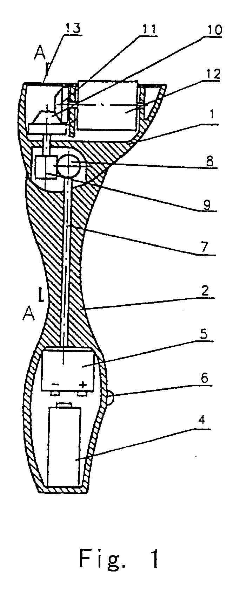

With reference to Fig1, the electric dental brush of the present invention is composed of a brush handle (2) and a protective shell (1), within the brush handle (2) are installed a power supply (4) and electric motor (5) connected to the switch (6) on the brush handle (2) through conducting wires. It further includes a transmission mechanism which includes a transmission shaft (7), a driving gear (8), at least a straight shaft cylindrical driven gear (9) and at least a pair of bevel gears (10)(11), the number of which corresponds to the number of the straight shaft cylindrical driven gears (9). The transmission shaft (7) of the transmission mechanism is located within the brush handle, while the other components of the transmission mechanism and the brush head (12) connected with the transmission component are located within the protective shell. One end of the transmission shaft (7) is coupled directly with the shaft of electric motor, the other end is connected with a driving gear (8) which engages with the straight shaft cylindrical driven gear (9), and the straight shaft cylindrical driven gear (9) is coaxial with a driving bevel gear (10) which engages with the driven bevel gear (11), on the shaft of the driven gear (11) is mounted a brush head (12). The shafts of the pair of the bevel gears are supported by the supporting frame (13). The protective shell is in the form of cover or hood, which can cover the most part of the brush head (12) and only a small part of brush hair is exposed at the opening of the shell. The protective shell (1) can keep the brush hair from contacting with the wall of the oral cavity, thereby achieving the aim of protecting the wall of the oral cavity.

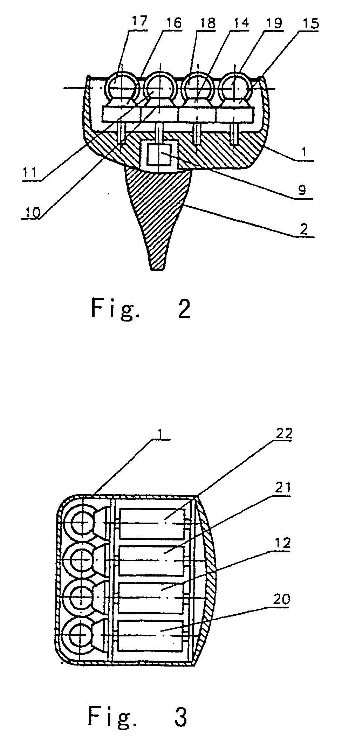

Referring of Fig 2 and Fig3. In order to improve the effect of tooth brushing, the brush head of the present invention can be made in the form of multiple brush heads arranged transversally with each brush head being connected to a pair of bevel gears and a straight shaft cylindrical driven gear, and the straight shaft cylindrical driven gears engage with each other. When the brush head is in the from of multiple-head arranged transversally, each brush head is connected with a pair of bevel gears and a straight shaft cylindrical driven gear, all straight shaft cylindrical driven gears have the same diameter and the same number of gear teeth.

Within the protective shell (1) of the present invention are provided four brush heads (12)(20)(21)(22) arranged side by side, which are of cylindrical shape and are arranged transversally at the opening of the protection shell with a small part of brush hair exposed outside the opening of the shell (referring to Fig 1 simultaneously). On the shafts of four side by side arranged brush heads (12) (20)(21)(22) are mounted respectively the driven bevel gears (11) (17)(18)(19), which in turn engage respectively with the driving bevel gears (10)(14)(15)(16); the driving bevel gears (10)(14)(15)(16) are mounted respectively on the shafts of the corresponding straight shaft cylindrical driven gears (9) which in turn engage with driving gear (8). The driving gear (8) may be spherical gear or ordinary gear, which is connected to electric motor through the transmission shaft. Due to the fact that, in the present invention, the driving bevel gears (10)(14) and (15)(16) are mounted on the corresponding shaft of the straight shaft cylindrical driven gear (9) and all straight shaft cylindrical driven gears are mutually engaged, when the dental brush is in use, the brush heads (12) and (22) rotate in one direction and the other two brush heads (20) (21) rotate in the opposite direction, thus resulting in a spiral advance.

In order to further improve the effect of teeth brushing, the brush hair on the surfaces of the bush heads (12)(20)(21)(22) are arranged such that an upper half brush hair is arranged into sight-hand, spiral form and a lower bevel half brush hair is arranged into right-hand spiral form. When teeth are brushed, because the brush heads rotate in opposite direction and the brush hair is arranged into left-hand and right-hand spiral directions, the dental calculuses and other residue substances will be removed from the middle portion of brush hair together with toothpaste, therefore the effect of tooth brushing is notable.

For the convenience of tooth brushing, and in order to make the brash head(s) reach all teeth in the oval cavity, a universal joint (not shown) may be provided at the location where the transmission shaft and the protection shell are joined so that the protection shell can rotate a certain degree around the brush handle, at this time, a supporting means (not shown) is used to support the transmission shaft.

### Industrial applicability

As compared with the prior art, the electric tooth brush according to the present invention has the following advantages:
1. The protective shell can effectively isolate brush head(s)from the wall of the oral cavity so that the brush hair will not make contact with the wall of the oral cavity, thereby the stimulation or irritation to the wall of the cavity by the brush head(s) can be avoided.
2. In use, there is a swinging angle between the protective shell and the brush handle so as to make the brash head(s)reach the position to be brushed.
3. The direction of rotation of each brush head is different, and the brush hair is arranged into left-hand and right-hand spiral form, the effect of tooth brushing is notable.

## Claims

1. A kind of dental brush with a protective shell driven by electric motor, it comprises a brush handle and a brush head, in the brush handle are installed a power supply and electric motor(s) with a switch provided on the surface of the brush handle, characterized in that it further comprises a transmission mechanism and a protective shell; the transmission mechanism includes a transmission shaft, a driving gear, at least a straight shaft cylindrical driven gear and at least a pair of bevel gears, the number of which corresponds to the number of the straight shaft cylindrical driven gears; the transmission shaft of the transmission mechanism is arranged within the brush handle, while the other components of the transmission mechanism and the brush head connected with the transmission component are arranged in the protective shell; one end of the transmission shaft is coupled with the shaft of the electric motor(s), the other end is connected with the driving gear, the driving gear engages with the straight shaft cylindrical driven gear, the straight shaft cylindrical driven gear is coaxial with the driving bevel gear, the driving bevel gear engages with the driven bevel gear; a brush head is provided on the shaft of the driven bevel gear; the said protective shell is in the form of a cover or hood, with a small portion of brush hair exposed at the opening of the protection shell.

2. The dental brush with a protection shell driven by electric motor according to claim 1, characterized in that the said power supply may be a battery or other stabilized D. C. Power sources.

3. The dental brush with a protective shell driven by electric motor according to claim 1, characterized in that the said brush head(s) is (are) in cylindrical form, on which brush hair is arranged into two portions in which an upper half brush hair is arranged into left-hand spiral form and a lower half brush hair is arranged into right-hand spiral form.

4. The dental brush with a protective shell driven by electric motor according to claim 1, characterized in that the said protection shell wraps or covers the most part of the brush head(s).

5. The dental brush with a protective shell driven by electric motor according to claim 1, characterized in that the brush head is in the form of multiple-heads arranged transversally, each brush head is connected to a pair of bevel gears and a straight shaft cylindrical driven gear and each straight shaft cylindrical driven gear engages with each other.

6. The dental brush with a protective shell driven by electric motor according to claim 5, characterized in that when the brush head is in the form of multiple-heads arranged transversally, each brush head is connected to a pair of bevel gears and a straight shaft cylindrical driven gear, all the straight shaft cylindrical driven gears have the same diameter and the same number of teeth.

7. The dental brush with a protective shell driven by eclectic motor according to claim 1, characterized in that a universal joint can be provided at the location where the said transmission shaft and the protective shell are joined.
